# EUROPEAN PATENT SPECIFICATION

(11) **EP 1 402 747 B1**
(45) Date of publication and mention of the grant of the patent: **21.09.2011**
(21) Application number: 02750971.0
(22) Date of filing: 23.05.2002
(51) Int. Cl.: H04W 24/00

(54) **TELECOMMUNICATIONS SYSTEM**
TELEKOMMUNIKATIONSSYSTEM
SYSTEME DE TELECOMMUNICATIONS

(30) Priority: 29.05.2001 GB 0112935
(43) Date of publication of application: 31.03.2004
(73) Proprietor: Telefonaktiebolaget L M Ericsson (publ), 164 83 Stockholm (SE)
(72) Inventor: DYSART, Robert, West Molesey, Surrey KT8 2PY (GB)
(74) Representative: O'Connell, David Christopher
(86) International application number: PCT/EP2002/005674
(87) International publication number: WO 2002/098147

(56) References cited:
- EP-A- 0 802 692
- EP-A- 0 967 817
- DE-A- 19 800 378

## Description

### Field of the Invention

The present invention relates to a method of transferring data between communication nodes in a telecommunications network and, in particular, to transferring data between a server and a remote base transceiver station.

### Background

As the intelligence and complexity of remote base transceiver stations (BTSs) increases, there is a need to transfer ever larger files to and from these remote nodes for operation and maintenance reasons. These reasons include, for example, the downloading of new or updated programs required to operate the nodes, or the retrieval of measurement results or performance data from the remote nodes.

The data transfers usually take place between the remote BTS nodes and the servers being used for operation and maintenance applications such as RANOS (Radio Access Network Operations System) or TRAM (Tools for Radio Access Management). These transfers are often done at night in low call traffic periods to minimise the impact on the remote nodes.

A limiting factor in the transfer of data is the relatively low fixed speed of the communications link between the remote BTS nodes and the operation and maintenance servers. For example, a typical communications link for operation and maintenance might have a bandwidth enabling data to be transferred at 64 or 128kbps. The large file sizes that are involved (hundreds of megabytes per BTS), and the very large number of remote nodes (several tens of thousands) mean that, for example, a remote upgrade of BTS software in a network might take a week or more to complete.

One known method of overcoming this problem is to compress the data files which are sent to, or retrieved from remote nodes. However, unlike the compression of speech or text data, file compression has only a limited benefit on files that contain binary data. Thus, data compression is not an effective method of improving or reducing the transfer times. Furthermore, compressing files at the remote node requires additional processing, memory and storage capacity, all of which have a degrading effect on the call handling capacity of the BTS.

Another known solution is to provide a dedicated, or dial-up high speed data link to each remote BTS. Again, in view of the large number of BTS nodes, this is not an efficient solution. The provision of dedicated, or dial up high-speed data links to all remote sites is more effective than data compression, but is not cost effective in view of the large number of links required to serve each of the remote BTS nodes. Furthermore, this type of solution takes a long time to implement, and the cost of this solution remains high for the lifetime of the node.

EP 0802692 discloses a method for controlling a base station of a first telecommunications system using control information generated in a second telecommunications system and transferred to the base station through a mobile station capable of operating in both the first and second systems.

### Summary of the invention

According to one aspect of the present invention, there is provided a method of transferring data between a server node and a remote base transceiver station in a telecommunications network, characterised in that the method comprises the steps of:
transferring data from the server node to a test mobile station associated with a base transceiver station; and
transferring data from the test mobile station to the base transceiver station, over a dedicated high speed communications link.

According to one embodiment of the invention, the remote base transceiver station is not in service.

According to another aspect of the present invention, there is provided a telecommunications network comprising a server, a base transceiver station, and a test mobile station associated with the base transceiver station, the telecommunications network further comprising a dedicated high speed communications link between the test mobile station and the base transceiver station, characterised in that the telecommunications network is configured to transfer data between the server and the base transceiver station via the test mobile station using the dedicated high speed communications link.

According to another embodiment of the present invention, the telecommunications network further comprises a second base transceiver station, the second base transceiver station having a serving cell which overlaps the test mobile station associated with the first base transceiver station. The telecommunications network is configured to transfer data between the server and the first base transceiver station via the second base transceiver station, the test mobile station and the dedicated high speed communications link.

### Brief description of the drawings

For a better understanding of the present invention, and to show more clearly how it may be carried into effect, reference will now be made, by way of example, to the accompanying drawings, in which:-
Figure 1 shows a telecommunications network according to the present invention;
Figure 2 shows a flow chart describing the transfer of data according to the present invention.

### Detailed description of a preferred embodiment of the present invention.

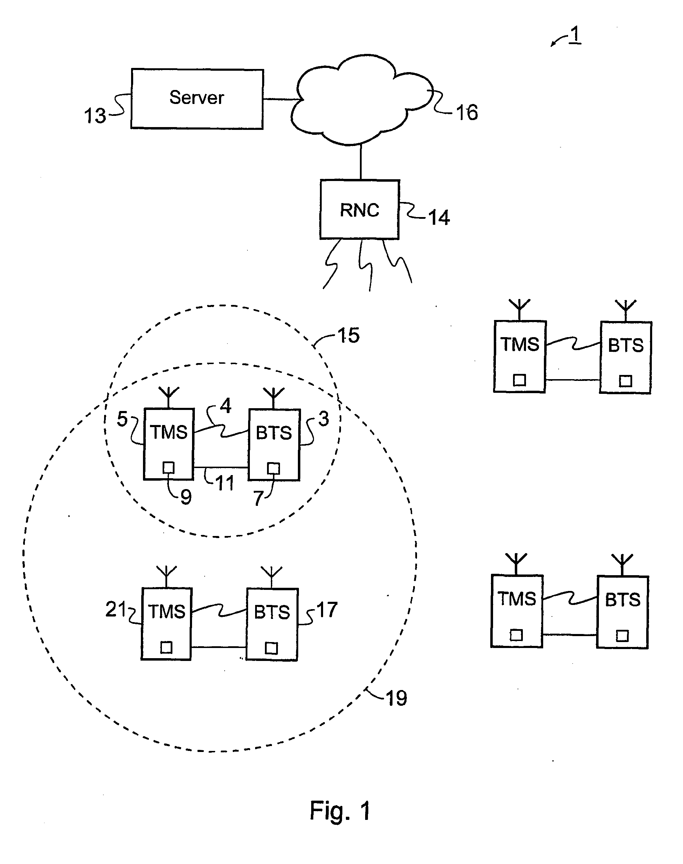

Referring to Figure 1, a telecommunications network 1 comprises a plurality of base transceiver stations (BTSs) 3. Data is normally transferred between a server 13 and a BTS 3 via a packet switched core network 16 and a radio network controller (RNC) 14. As stated earlier, this has the disadvantages that some of the BTS's call handling capacity is taken up, that the operation and maintenance link normally used has a fixed, low data rate, and that a commissioned link (RNC to BTS, or dialup) is required.

According to the present invention, data is transferred to a BTS 3 via a test mobile station 5.

The conventional function of the test mobile station 5 is to provide on-site test facilities of the radio interface 4 provided by the BTS 3 when it is in normal operation. That is, the test mobile station 5 exists to test the radio interface 4 either routinely, or upon command from an operation and maintenance centre as part of the normal tasks of an operating network. Typically, the test mobile station 5 exists in the form of an "optional card" on the backplane of the BTS 3. In such an arrangement, the radio interface 4 between the test mobile station 5 and the BTS 3 is provided by coaxial cables on the radio path.

The test mobile station 5 is capable of supporting high speed data calls, which in turn provide the link to carry FTP and/or Telnet access, as required, to the BTS 3.

Thus, according to this aspect of the present invention, a high speed packet data call (for example 384Kbps or greater) is established to the test mobile station 5 of BTS 3 from the operation and maintenance server 13. The call is routed from the server 13, via the packet switched core network 16, via the RNC 14, over the Iub interface (not shown) to the BTS 3. The call is then routed over the radio interface 15 provided by the BTS 3 to the test mobile station 5.

Once a call has been established between the server 13 and the test mobile station 5, data may be transferred in either direction at high speeds.

Data is then transferred at high speed between the test mobile station 5 and the BTS 3 over a dedicated link 11, as will be described in greater detail later.

Although some of the capacity of the Iub interface, the RNC 14, and the radio interface 15 is used for this call, the overall impact is small because of the large capacity provided by each of these elements. This type of operation and maintenance function is preferably carried out late at night, so the effect of this call on normal traffic should be minimal. This aspect of the invention has the advantage that the usual low data rate of the operation and maintenance link (64Kbps/128Kbps) is overcome by using a high speed packet data call on the Iub interface and radio interface 15 when sending data to the test mobile station 5, and the high speed data link 11 for transmitting data between the test mobile station 5 and the BTS 3.

According to another aspect of the present invention, data is transferred to the test mobile station 5 using the overlapping radio interface coverage 19 of another, in service, BTS 17. This aspect of the invention allows data to be transferred to a BTS 3 that does not have a working transmission link carrying the Iub interface, and the BTS 3 is effectively isolated from the radio access network.

Thus, in this aspect of the present invention, data intended for a BTS 3 is transferred by a high speed data packet call to the test mobile station 5 associated with that particular BTS 3. This call is established using standard procedures through the telecommunications network, but via the radio interface 19 of another operational, overlapping, cell of an adjacent BTS 17. Since the test mobile station 5 has access to the antenna system of the BTS 3, the call is connected via the adjacent BTS 17.

Once established, the call carries the data connection from the operation and maintenance server 13, via the packet switched core network 16, the RNC 14, the adjacent BTS 17, the radio interface 19 of the adjacent BTS 17, to the test mobile station 5. Data is carried to and/or from the processor 9 of the test mobile station 5 to the main processor or processor cluster 7 of the BTS 3 by a dedicated high speed data connection 11.

In each of the embodiments described above, the data connection 11 is preferably an AAL5 Ip over ATM connection, enabling data to be transferred at high speed between the main processing board 9 of the test mobile station 5 and the main processing board 7 of the BTS 3.

When the test mobile station 5 is provided in the form of an "optional card" in the BTS 3, the high speed connection 11 may be provided within the magazine backplane of the BTS 3. That is, the backplane of the BTS 3 is effectively an ATM switching unit, with very high throughput and capacity. In this manner, many ATM connections can be supported to the same card simultaneously. The ATM connections are provided over a set of physical links that exist in the backplane.

For example, a device board module of a processing board 9 in the test mobile station 5 could provide the necessary circuitry for the ATM connections to a switch core board in the BTS 3. The switch core board, in conjunction with the magazine backplane of the BTS, provides the main switching fabric within the BTS. The test mobile station 5 and other cards are all connected to this backplane. Data can therefore be passed from the processing board 9 of the test mobile station to the main processor or main processor cluster 7 in the BTS, via the additional AAL5 Ip over ATM connections in the switch core board.

In summary, to transmit data to the BTS 3, the data is first transmitted to the test mobile station 5, either directly as described in the first aspect of the invention, or via an overlapping BTS 17 as described in the second aspect of the invention. Then, the data is transferred at high speed from the test mobile station 5 to the BTS 3 using a high-speed link 11.

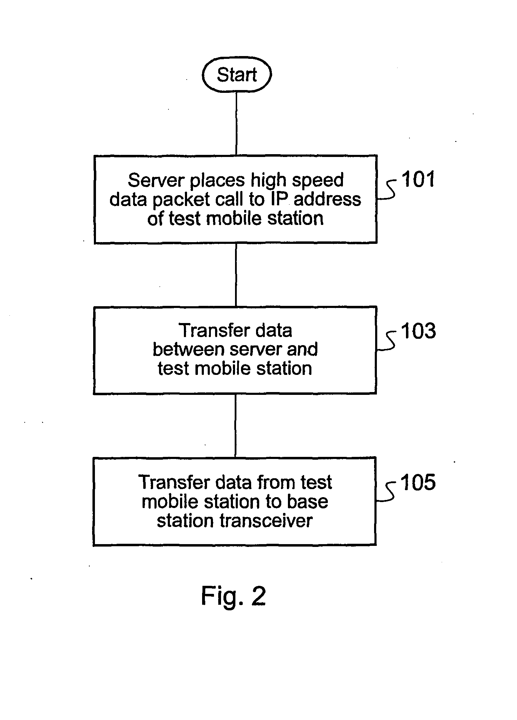

Figure 2 shows the steps involved in transferring data from a server 13 to a remote BTS 3.

First, the server establishes a high speed data packet call to the IP address of the test mobile station 5, step 101. This can be established using conventional or existing functionality. For example, the IP network where the server 13 exists establishes a packet data call to a RNC 14. The RNC routes the call to a BTS serving the test mobile station 5.

Advantageously, the data can be transmitted to the test mobile station 5 via the BTS 17 of an overlapping cell 19. This has the advantage of enabling data to be transferred using the available capacity of a neighbouring BTS 17, which means that the call handling capability of BTS 3 is not affected. Furthermore, BTS 3 does not necessarily require a working transmission link.

Once a call is established between the server 13 and test mobile station 5, data is sent to the test mobile station 5 at high speed, step 103. The high-speed data rate between the server 13 and the test mobile station 5 results in a short transfer time between the server 13 and test mobile station 5.

The data is then sent from the test mobile station 5 to the BTS 3 using the dedicated high-speed data connection 11, step 105. Thus, the test mobile station 5 acts as a high-speed data interface between the server 13 and the remote BTS 3.

The method described above enables large data files to be transferred between a server and a remote BTS at high speed. It is noted that the FTP session, which is originated at the operation and maintenance server, is a bidirectional function. To send a file to the BTS from the server, a PUT command is issued at the server. To retrieve a file from the BTS to the server, the GET command is issued at the server. For a Telnet session, all commands are entered on the server Telnet session, and printouts are returned to the Telnet session of the server.

Furthermore, the invention also enables data to be transmitted to, or received from, a BTS 3 which is not yet in service. This is made possible by the fact that the test mobile station is within overlapping coverage of another BTS 17 that is already in service. In this situation, since the BTS 3 is not in service, the antenna of the BTS 3 can be used by the test mobile station 5 (i.e. as an "external" antenna) for communicating with a neighbouring BTS 17. The test mobile station 5 has permanent radio connections to the main BTS 3 antennas, so that the test mobile station 5 can easily pick up overlapping coverage of an adjacent BTS 17.

This aspect of the invention has the added advantage of enabling a remote BTS 3 to be updated and controlled before the BTS is commissioned or entered into service.

The invention described above has the advantage of providing a low cost dedicated high-speed data connection to remote BTSs 3 when it is required to transfer large data files, using very little development work.

In addition, the invention has the advantage of being able to connect to remote sites for operation and maintenance functions, (for example, FTP, Telnet, HTTP, etc.), before any other transmission bearer is connected to the site.

Furthermore, the invention enables a reduction in the cost of dedicated operation and maintenance links. In the case where the operation and maintenance links are multiplexed on the transmission link with the Iub interface, a smaller proportion of the Iub interface will he-required (i.e. lower rate data). In the case where dial-up links are used, only a low date rate link needs to be specified for alarm reporting and BTS handling.

The invention has the advantage that it enables new software to be rolled out and/or updated much faster than existing systems, and enables performance files to be retrieved more quickly from remote BTS nodes.

Although the preferred embodiment discusses the new use of a test mobile station in the UMTS (3G) system, it is noted that the invention is equally applicable in the GSM (2G) and GPRS (2.5G) systems.

## Claims

1. A method of transferring data between a server node (13) and a remote base transceiver station (3) in a telecommunications network (1), **characterised in that** the method comprises the steps of:
transferring data from the server node (13) to a test mobile station (5) associated with a base transceiver station (3); and
transferring data from the test mobile station (5) to the base transceiver station (3) over a dedicated high speed communications link (11).

2. A method as claimed in claim 1, wherein the dedicated high speed communications link (11) is an ATM link.

3. A method as claimed in claim 1 or 2, wherein data is transferred between the server node (13) and the test mobile station (5) via a second base transceiver station (17), the second base transceiver station (17) having a service cell (19) which overlaps the test mobile station (5).

4. A method as claimed in claim 1, wherein the remote base transceiver station (3) is not in service.

5. A method as claimed in claim 4, wherein the data is transferred between the server node (13) and the test mobile station (5) via a second base transceiver station (17), the second base transceiver station (17) being in service and having a serving cell (19) which overlaps the test mobile station (5).

6. A telecommunications network (1) comprising a server (13), a base transceiver station (3), and a test mobile station (5) associated with the base transceiver station (3), the telecommunications network (1) further comprising a dedicated high speed communications link (11) between the test mobile station (5) and the base transceiver station (3), **characterised in that** the telecommunications network (1) is configured to transfer data between the server (13) and the base transceiver station (3) via the test mobile station (5) using the dedicated high speed communications link (11).

7. A telecommunications network (1) as claimed in claim 6, wherein the dedicated high speed communications link (11) is an ATM link.

8. A telecommunications network (1) as claimed in claim 6, further comprising:
a second base transceiver station (17), the second base transceiver station (17) having a serving cell (19) which overlaps the test mobile station (5) associated with the first base transceiver station (13);
wherein the telecommunications network (1) is configured to transfer data between the server (13) and the first base transceiver station (13) via the second base transceiver station (17), the test mobile station (5) and the dedicated high speed communications link (11).

9. A telecommunications network as claimed in claim 8, wherein the dedicated high speed communications link (11) is an ATM link.

## Patentansprüche

1. Verfahren zur Übertragung von Daten zwischen einem Serverknoten (13) und einer Fern-Basistransceiver-Station (3) in einem Telekommunikationsnetzwerk (1), **dadurch gekennzeichnet, dass** das Verfahren die Schritte umfasst:
Übertragen von Daten von dem Serverknoten (13) an eine Test-Mobilstation (5), die einer Basistransceiver-Station (3) zugehörig ist; und
Übertragen von Daten von der Test-Mobilstation (5) an die Basistransceiver-Station (3) über eine zugeordnete Hochgeschwindigkeits-Kommunikationsverbindung (11).

2. Verfahren wie in Anspruch 1 beansprucht, wobei die zugeordnete Hochgeschwindigkeits-Kommunikationsverbindung (11) eine ATM Verbindung ist.

3. Verfahren wie in Anspruch 1 oder 2 beansprucht, wobei Daten zwischen dem Serverknoten (13) und der Test-Mobilstation (5) über eine zweite Basistransceiver-Station (17) übertragen werden, wobei die zweite Basistransceiver-Station (17) eine Dienstzelle (19) aufweist, die die Test-Mobilstation (5) überlappt.

4. Verfahren wie in Anspruch 1 beansprucht, wobei die Fern-Basistransceiver-Station (3) außer Betrieb ist.

5. Verfahren wie in Anspruch 4 beansprucht, wobei die Daten zwischen dem Serverknoten (13) und der Test-Mobilstation (5) über eine zweite Basistransceiver-Station (17) übertragen werden, wobei die zweite Basistransceiver-Station in Betrieb ist und eine Dienstzelle (19) aufweist, die die Test-Mobilstation (5) überlappt.

6. Telekommunikationsnetzwerk (1) umfassend einen Server (13), eine Basistransceiver-Station (3), und eine Test-Mobilstation (5), die einer Basistransceiver-Station (3) zugehörig ist, wobei das Telekommunikationsnetzwerk weiterhin eine zugeordnete Hochgeschwindigkeits-Kommunikationsverbindung (11) zwischen der Test-Mobilstation (5) und der Basistransceiver-Station (3) umfasst, **gekennzeichnet dadurch, dass** das Telekommunikationsnetzwerk (1) dazu eingerichtet ist, Daten zwischen dem Server (13) und der Basistransceiver-Station (3) über die Test-Mobilstation (5) zu übertragen unter Verwendung der zugeordneten Hochgeschwindigkeits-Kommunikationsverbindung (11).

7. Telekommunikationsnetzwerk (1) wie in Anspruch 6 beansprucht, wobei die zugeordnete Hochgeschwindigkeits-Kommunikationsverbindung (11) eine ATM Verbindung ist.

8. Telekommunikationsnetzwerk (1) wie in Anspruch 6 beansprucht, weiterhin umfassen:
eine zweite Basistransceiver-Station (17), wobei die zweite Basistransceiver-Station (17) eine Dienstzelle (19) aufweist, die die Test-Mobilstation (5) überlappt, die mit der ersten Basistransceiver-Station (13) verbunden ist;
wobei das Telekommunikationsnetzwerk (1) dazu eingerichtet ist, Daten zwischen dem Server (13) und der ersten Basistransceiver-Station (13) über die zweite Basistransceiver-Station (17), die Test-Mobilstation (5) und die zugeordnete Hochgeschwindigkeits-Kommunikationsverbindung (11) zu übertragen.

9. Telekommunikationsnetzwerk (1) wie in Anspruch 6 beansprucht, wobei die zugeordnete Hochgeschwindigkeits-Kommunikationsverbindung (11) eine ATM Verbindung ist.

## Revendications

1. Procédé de transfert de données entre un noeud serveur (13) et une station de base émettrice-réceptrice distante (3) dans un réseau de télécommunications (1), **caractérisé en ce que** le procédé comprend les étapes consistant à :
transférer des données du noeud serveur (13) vers une station mobile d'essai (5) associée à une station de base émettrice-réceptrice (3) ; et
transférer des données de la station mobile d'essai (5) vers la station de base émettrice-réceptrice (3) sur une liaison de communication spécialisée à grande vitesse (11).

2. Procédé selon la revendication 1, dans lequel la liaison de communication spécialisée à grande vitesse (11) est une liaison ATM.

3. Procédé selon la revendication 1 ou 2, dans lequel des données sont transférées entre le noeud serveur (13) et la station mobile d'essai (5) en passant par une seconde station de base émettrice-réceptrice (17), la seconde station de base émettrice-réceptrice (17) possédant une cellule de service (19) qui couvre la station mobile d'essai (5).

4. Procédé selon la revendication 1, dans lequel la station de base émettrice-réceptrice (3) distante n'est pas en service.

5. Procédé selon la revendication 4, dans lequel les données sont transférées entre le noeud serveur (13) et la station mobile d'essai (5) en passant par une seconde station de base émettrice-réceptrice (17), la seconde station de base émettrice-réceptrice (17) étant en service et possédant une cellule de service (19) qui couvre la station mobile d'essai (5).

6. Réseau de télécommunications (1) comprenant un serveur (13), une station de base émettrice-réceptrice (3) et une station mobile d'essai (5) associée à la station de base émettrice-réceptrice (3), le réseau de télécommunications (1) comprenant en outre une liaison de communication spécialisée à grande vitesse (11) entre la station mobile d'essai (5) et la station de base émettrice-réceptrice (3), **caractérisé en ce que** le réseau de télécommunications (1) est configuré pour transférer des données entre le serveur (13) et la station de base émettrice-réceptrice (3) en passant par la station mobile d'essai (5) et en utilisant la liaison de communication spécialisée à grande vitesse (11).

7. Réseau de télécommunications (1) selon la revendication 6, dans lequel la liaison de communication spécialisée à grande vitesse (11) est une liaison ATM.

8. Réseau de télécommunications (1) selon la revendication 6, comprenant en outre :
une seconde station de base émettrice-réceptrice (17), la seconde station de base émettrice-réceptrice (17) possédant une cellule de service (19) qui couvre la station mobile d'essai (5) associée à la première station de base émettrice-réceptrice (3) ;
dans lequel le réseau de télécommunications (1) est configuré pour transférer des données entre le serveur (13) et la première station de base émettrice-réceptrice (13) en passant par la seconde station de base émettrice-réceptrice (17), la station mobile d'essai (5) et la liaison de communication spécialisée à grande vitesse (11).

9. Réseau de télécommunications selon la revendication 8, dans lequel la liaison de communication spécialisée à grande vitesse (11) est une liaison ATM.
